(19) Europäisches Patentamt
European Patent Office
Office européen des brevets

(11) EP 0 525 492 B1

(12) EUROPÄISCHE PATENTSCHRIFT

(45) Veröffentlichungstag und Bekanntmachung des Hinweises auf die Patenterteilung:
**05.06.1996 Patentblatt 1996/23**

(51) Int Cl.[6]: **G02F 1/35**, G02F 1/13

(21) Anmeldenummer: **92111899.8**

(22) Anmeldetag: **13.07.1992**

# (54) Elektrooptische Anordnung

Electro-optical arrangement

Agencement électro-optique

(84) Benannte Vertragsstaaten:
**DE GB**

(30) Priorität: **26.07.1991 DE 4124863**

(43) Veröffentlichungstag der Anmeldung:
**03.02.1993 Patentblatt 1993/05**

(73) Patentinhaber: **MERCK PATENT GmbH**
**D-64271 Darmstadt (DE)**

(72) Erfinder:
- **Finkelmann, Heino, Prof. Dr.**
  **W-6819 Denzlingen (DE)**
- **Derow, Stephan**
  **W-7800 Freiburg (DE)**
- **Bohnert, Robert**
  **W-7800 Freiburg (DE)**
- **Scheuble, Bernhard, Dr.**
  **W-6104 Seeheim (DE)**
- **Finkenzeller, Ulrich, Dr.**
  **W-6831 Plankstadt (DE)**
- **Poetsch, Eike, Dr.**
  **W-6109 Mühltal (DE)**
- **Wilhelm, Stefan, Dr.**
  **W-6148 Heppenheim (DE)**

(56) Entgegenhaltungen:
**DE-A- 3 919 942** **US-A- 4 842 380**
**US-A- 4 950 052** **US-A- 5 004 323**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine zwischen einem transparenten und einem opaken Zustand schaltbare elektrooptische Anordnung, die auf einem elektrisch schaltbaren Streueffekt an Flüssigkristallmolekülen basiert.

In den letzten Jahren sind große Anstrengungen zur Entwicklung von Flüssigkristalldisplays unternommen worden, welche einen elektrisch schaltbaren Streueffekt ausnutzen, da derartige Displays - etwa im Unterschied zu verdrillten nematischen Zellen - keine Polarisatoren benötigen und sich daher durch eine sehr viel höhere Helligkeit auszeichnen.

Beispiele für derartige Streusysteme sind z.B. die in US 4,435,047, US 4,688,900 oder EP 0,272,582 beschriebenen PDLC-oder NCAP-Filme, bei denen eine der beiden Phasen eine niedermolekulare Flüssigkristallmischung ist, welche in einer von der anderen Phase gebildeten polymeren Matrix dispergiert ist. Durch die Anpassung z.B. des ordentlichen Brechungsindices $n_o$ der Flüssigkristallmischung an den Brechungsindex der polymeren Matrix wird erreicht, daß das System bei anliegender Spannung für senkrecht auftreffendes Licht optisch isotrop und damit durchlässig ist, während das Licht im nicht angesteuerten Zustand an den statistisch ausgerichteten Flüssigkristallmolekülen gestreut wird und das System undurchsichtig ist.

Der höheren Helligkeit des durchsichtigen Zustands steht als gravierender Nachteil die thermodynamische Instabilität dieser Systeme gegenüber. Der monomere Flüssigkristall tendiert dazu, aus der polymeren Matrix heraus zu diffundieren ("Ausschwitzen") - ein Effekt, der etwa auch bekannt ist von niedermolekularen Additiven wie z.B. Weichmachern, Antioxidantien etc., die Polymeren üblicherweise zur Modifikation oder Optimierung ihrer Eigenschaften zugesetzt werden. Da es sich bei dem in NCAP- oder PDLC-Filmen verwendeten Flüssigkristall in aller Regel um eine Mischung verschiedener Einzelkomponenten mit unterschiedlichen Diffusionskoeffizienten handelt, macht sich der Diffusionsprozeß bereits sehr früh bemerkbar, da durch die Wegdiffusion einzelner Komponenten die physikalischen Eigenschaften des zurückbleibenden Flüssigkristall-Tröpfchens geändert werden und insbesondere die Anpassung der Brechungsindices verstimmt wird.

Nach EP 0,357,234 kommt es in NCAP-Folien bei mechanischer Belastung, wie sie etwa bei der Aufbringung dieser Folien auf Glas- oder Kunststoffsubstrate auftritt, zu einem als "stress-clearing" oder "bleeding" bezeichneten Phänomen, bei dem der Flüssigkristall unter zumindest teilweiser Auflösung der Flüssigkristalltröpfchen in das verkapselnde Polymer oder an die Filmoberfläche gedrückt wird. Zur Vermeidung dieses Effekts wird vorgeschlagen, bei der Herstellung der NCAP-Folien als Schutzkolloid Polyvinylpyrrolidon (PVP) zuzusetzen, welches eine Schutzbarriere um die Flüssigkristalltröpfchen bilden soll.

Die mechanische Stabilität derartiger modifizierter NCAP-Folien wird jedoch nicht allen Anforderungen gerecht.

Es besteht somit ein erheblicher Bedarf an elektrooptischen Systemen, die auf einem elektrisch schaltbaren Streueffekt basieren und die durch eine hohe Stabilität gekennzeichnet sind.

Der Erfindung lag die Aufgabe zugrunde, Systeme mit diesen Eigenschaften anzugeben, die jedoch nicht die Nachteile der bisher diskutierten Anordnungen aufweisen.

Es wurde gefunden, daß diese Aufgabe durch die Bereitstellung der erfindungsgemäßen elektrooptischen Anordnung gelöst werden kann, welche zwischen 2 mit Elektrodenschichten und gegebenenfalls mit Ausrichtungsschichten versehenen Substraten eine Dispersion aus 2 Phasen A und B enthält, wobei die Dispersion eine stabile Flüssig-Flüssig-Dispersion ist und eine der beiden Phasen A und B auf einem niedermolekularen Flüssigkristall und die andere auf einem flüssigkristallinen Polymer basiert.

Gegenstand der Erfindung sind derartige Anordnungen sowie Verfahren zu ihrer Herstellung.

Die Flüssig-Flüssig-Dispersion befindet sich zwischen 2 Substraten aus Glas oder anderen Materialien, wobei zumindest eines der beiden Substrate durchsichtig ist. Auf den Substraten befinden sich Elektrodenschichten aus z. B. Indiumoxid oder Indium-Zinnoxid (ITO) mit darüber angeordneten Orientierungsschichten, die z.B. aus Polyimid oder Teflon bestehen können. Durch die Orientierungsschicht erfolgt eine z.B. im wesentlichen planare oder im wesentlichen homöotrope Orientierung der kontinuierlichen Phase, wobei die Ausrichtungsvorzugsrichtung i.a. um einen kleinen Winkel $\alpha$ gegen die Flächenebene bzw. gegen die Flächennormale geneigt ist.

Die beiden Phasen können für die dielektrische Anisotropie Werte mit unterschiedlichem oder gleichem Vorzeichen aufweisen.

In Fig. 1 ist eine spezielle Ausgestaltung des erfindungsgemäßen Systems gezeigt, worin die kontinuierliche Phase auf einem niedermolekularen, planar orientierten Flüssigkristall mit negativer dielektrischer Anisotropie basiert, während die dispergierte Phase auf dielektrisch positiven, flüssigkristallinen Oligomer- bzw. Polymermolekülen basiert. Im feldfreien Zustand (Fig. 1a) werden die LC-Oligomer bzw. Polymermoleküle durch die umgebende kontinuierliche Monomerphase homogen orientiert, und die Anordnung erscheint durchsichtig, wenn die ordentlichen und außerordentlichen Brechungsindizes der beiden Phasen aneinander angepaßt sind:

$$n_{e,A} \sim n_{e,B} \qquad (1)$$

$$n_{o'A} \sim n_{o'B} \qquad (2)$$

Durch die Anpassung sowohl der ordentlichen als auch der außerordentlichen Brechungsindizes der beiden Phasen A und B sieht auch schräg einfallendes Licht stets ein optisch isotropes Material und das System erscheint transparent; das bei herkömmlichen PDLC- und NCAP-Folien beobachtete Phänomen des "off-axis"-haze tritt bei den erfindungsgemäßen Anordnungen somit nicht auf.

Bei Anlegen einer Spannung wird auf die kontinuierliche, dielektrisch negative Monomerphase kein Drehmoment ausgeübt, während die dielektrisch positiven LC-Oligomer- bzw. Polymermoleküle in Feldrichtung ausgerichtet werden. Einfallendes Licht sieht nun an der Phasengrenze Monomerphase/Oligomer- bzw. Polymerphase eine sprunghafte Änderung der Brechungsindizes um

$$\Delta n_e' = | n_{e'A} - n_{o'B} | \qquad (3)$$

$$\Delta n_o' = | n_{o'A} - n_{e'B} | \qquad (4)$$

und das Licht wird gestreut.

In Fig. 2 ist eine andere bevorzugte Ausgestaltung der erfindungsgemäßen Systeme gezeigt, bei der die kontinuierliche Phase auf einem homöotrop orientierten, dielektrisch positiven flüssigkristallinen Oligomer bzw. Polymer basiert, während die dispergierte Phase einen niedermolekularen Flüssigkristall mit negativer dielektrischer Anisotropie enthält. Die Brechungsindizes sind gemäß obigen Gleichungen (1) und (2) aneinander angepaßt, und die Anordnung erscheint im feldfreien Zustand (Fig. 2a) durchsichtig, wobei erneut keine Abhängigkeit des Kontrastes vom Blickwinkel gegeben ist. Bei Anlegen einer Spannung wird die dielektrisch negative, dispergierte Monomerphase senkrecht zur Feldrichtung ausgerichtet, während die kontinuierliche, dielektrisch positive Oligomer- bzw. Polymerphase nicht umorientiert wird.

In einer anderen speziellen Ausgestaltung, die als weiteres Beispiel betrachtet werden soll, basiert die kontinuierliche Phase auf einem planar orientierten, dielektrisch positiven LC-Oligomer bzw. LC-Polymer, während die dispergierte Phase auf einem dielektrisch positiven, monomeren Flüssigkristall basiert. Wenn die obigen Gleichungen (1) und (2) erfüllt sind, ist die Anordnung im feldfreien Zustand unabhängig vom Beobachtungswinkel durchsichtig. Bei Einschalten einer Spannung wird zunächst diejenige der beiden Phasen in Feldrichtung gedreht, die die kleinere Schwellenspannung aufweist; dadurch wird die Anpassung der Brechungsindizes aufgehoben, und die Anordnung erscheint opak. Bei weiterer Erhöhung der Spannung wird auch die Phase mit der höheren Schwellenspannung, das ist i.a. die Oligomer- bzw. Polymerphase, in Feldrichtung ausgerichtet und die Anordnung wird wieder durchsichtig.

Andere spezielle Ausgestaltungen erfindungsgemäßer Systeme können vom Fachmann auf der Grundlage dieser Beschreibung ohne erfinderisches Zutun abgeleitet werden. Dabei sind Anordnungen, bei denen die beiden Phasen für die dielektrische Anisotropie Werte mit unterschiedlichem Vorzeichen aufweisen, i.a. bevorzugt.

Die erfindungsgemäßen Systeme, welche 2 flüssige Phasen enthalten, zeichnen sich durch eine außerordentlich hohe Stabilität aus, und dem Ausschwitzen oder stress-clearing vergleichbare Effekte, die bei herkömmlichen PDLC- und NCAP-Filmen beobachtet werden, treten nicht auf.

Als flüssigkristalline Oligomere oder Polymere werden bevorzugt Seitenkettenoligomere bzw. -polymere der Formel I verwendet

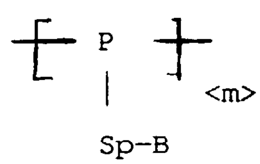

I

worin

- P eine Polymerhauptketteneinheit,
- Sp eine bivalente Spacergruppe, und
- B einen organischen "rod-like"-Rest mit mindestens 2 sechsgliedrigen Gruppen, einen "disk-like"- oder einen "board-like"-Rest und
- <m> den mittleren Polymerisationsgrad

bedeuten. Formel I soll Seitenkettenoligomere bzw. -polymere nur relativ schematisch symbolisieren; so ist es z.B. nicht erforderlich, daß jede Hauptketteneinheit eine mesogene Einheit trägt und es können z.B. auch Copolymerisate, in denen P verschiedene Hauptketteneinheiten repräsentiert, verwendet werden. Weiterhin kann P bzw. bei Copolymensaten auch eine oder mehrere der Gruppen P eine bzw. auch mehrere mesogene Gruppen bedeuten, so daß Formel I auch kombinierte Hauptketten-/Seitenkettenoligomere bzw. -polymere umfaßt.

Eine gute Übersicht über Seitenkettenpolymere und Verfahren zu ihrer Herstellung gibt H. Finkelmann in Thermotropic Liquid Crystals, ed. by G.W. Gray, Chichester 1987, S. 159ff.

Wird eine Mischung von 2 oder mehr flüssigkristallinen Oligomeren und/oder Polymeren verwendet, bedeutet <m> das arithmetische Mittel der mittleren Polymerisationsgrade der verschiedenen Komponenten der Polymerphase.

Flüssigkristalline Polymere können verschiedene Phasen aufweisen, wobei für Seitenkettenpolymere mit nicht zu stark polaren mesogenen Gruppen B häufig eine Korrelation zwischen der Phasensequenz der entsprechenden niedermolekularen Verbindungen B und der der Seitenkettenpolymere beobachtet wird (s. Thermotropic Liquid Crystals, ed. by G.W. Gray, Chichester 1987, S. 164). Flüssigkristalline Polymere und insbesondere Seitenkettenpolymere mit nematischer und/oder smektischer Phase und ganz besonders mit nematischer Phase sind bevorzugt, wobei die Begriffe nematisch und smektisch weit gefaßt sind und auch cholesterisch-nematische und cholesterische-smektische Phasen mit einer Helixstruktur umfassen.

Als polymeres Rückgrat -(-P-)- kommen prinzipiell alle Polymeren in Frage, deren Ketten eine gewisse Flexibilität aufweisen. Es kann sich hierbei um lineare, verzweigte oder cyclische Polymerketten handeln. Der Polymerisationsgrad beträgt normalerweise mindestens 10; es kommen jedoch auch Oligomere mit 3 bis 15, insbesondere mit 4 bis 7 Monomereinheiten, in Frage.

Vorzugsweise werden Polymere mit C-C-Hauptketten, insbesondere Polyacrylate, -methacrylate, -α-halogenacrylate, -α-cyanacrylate, -acrylamide, -acrylnitrile oder -methylenmalonate eingesetzt. Weiterhin bevorzugt sind auch Polymere, -ester, -amide, -imide, -phosphazene oder -urethane oder insbesondere Polysiloxane.

Als Spacer kommen vor allem lineare oder verzweigte Alkylengruppen mit 1-20 C-Atomen in Betracht, worin auch eine oder mehrere nicht benachbarte CH2-Gruppen durch -O-, -S-, -CO-, -O-CO-, -S-CO-, -O-COO-, -CO-S-, -CO-O-, -CH-Halogen, -CHCN-, -CH=CH- und -C≡C- ersetzt sein können.

Als Spacer sind beispielsweise folgende Gruppen geeignet: Ethylen, Propylen, Butylen, Pentylen, Hexylen, Heptylene, Octylen, Nonylen, Decylen, Undecylen, Dodecylen, Octadecylen, Ethylenoxyethylen, Methylenoxybutylen, Ethylenthioethylen, Ethylen-N-methyliminoethylen oder 1-Methylalkylen.

Als Beispiele für Vernetzer seien Schwefel, Hexamethylentetramin, Paraformaldehyd, Zinkoxid, Divinylbenzol, Dialkylalkohol, Amine, Fettsäureamide, Oligoalkene, Oligosulfide und Diisocyanate genannt, wobei diese Beispiele, ebenso wie die für Sp und P angeführten, die Erfindung lediglich erläutern sollen, ohne sie jedoch zu begrenzen.

B bedeutet bevorzugt eine stäbchenförmige ("rod-like") oder eine brettförmige ("board-like") mesogene Gruppe.

Als stäbchenförmige mesogene Gruppen werden i.a. niedermolekulare flüssigkristalline Reste verwendet, die über ausreichend flexible Spacer terminal oder lateral an die Polymerkette gebunden sind. Bei terminaler Verknüpfung, die i.a. bevorzugt ist, können diese Reste um die Moleküllängsachse rotieren und weisen daher eine Zylindersymmetrie auf.

Wird dagegen durch eine starre Spacergruppe die Rotation der nematischen Reste praktisch unterbunden, erhält man brettförmige mesogene Gruppen. Es können jedoch auch andere Reste mit brettförmiger Geometrie verwendet werden.

In flüssigkristallinen Polymeren mit brettförmigen mesogenen Gruppen können nicht nur die Moleküllängsachsen parallel angeordnet sein, sondern es ist darüberhinaus noch eine Orientierungsfernordnung bezüglich der Querachsen möglich. Solche flüssigkristalline Polymere bezeichnet man als biaxial nematisch.

Besonders bevorzugt bedeutet B einen Rest der Formel III

$$R^1\text{-}(A^1\text{-}Z^1)_n\text{-}A^2\text{-}Z^2\text{-}A^3\text{-} \qquad \text{III}$$

worin

| | |
|---|---|
| $R^1$ | F, CN oder ein unsubstituierter oder durch mindestens ein Halogenatom substituierter Alkylrest mit jeweils 1-15 C-Atomen, worin eine oder mehrere nicht benachbarte CH2-Gruppen durch -O- und/oder -S-Atome und/oder -CO-, -O-CO-, -CO-O-, -O-CO-O-, -S-CO- und/oder -CO-S- und/oder -CH=CH-Gruppen ersetzt sein können, |
| $Z^1$ und $Z^2$ | jeweils unabhängig voneinader -CO-O-, -O-CO-, $-CH_2CH_2-$, $-CH_2-O-$, $-OCH_2-$, -C≡C- oder eine Einfachbindung, |
| $A^1$, $A^2$ und $A^3$ | jeweils unabhängig voneinander eine 1,4-Phenylengruppe, worin auch eine oder mehrere CH-Gruppen durch N ersetzt sein können, eine 1,4-Cyclohexylengruppe, worin auch eine oder zwei nicht benachbarte $CH_2$-Gruppen durch O und/oder S ersetzt sein können, eine 1,4-Cyclohexenylengruppe, eine 1,4-Bicyclo(2,2,2)-octylengruppe, eine Piperidin-1,4-diylgruppe, eine Naphthalin-2,6-diyl- |

gruppe, eine Decahydronaphthalin-2,6-diylgruppe, eine 1,2,3,4-Tetrahydronaphthalin-2,6-diylgruppe, wobei alle diese Gruppen unsubstituiert oder durch Halogen, Nitril und/oder 1,4-C-Alkyl ein- oder mehrfach substituiert sein können, und

n 0, 1, 2 oder 3

bedeuten.

Durch die Formel III sind 2-, 3-, 4- und 5-kernige Reste der Teilformel III 1 - III 4 umfaßt:

$$R^1\text{-}A^2\text{-}Z^2\text{-}A^3 \qquad \text{III 1}$$

$$R^1\text{-}A^1\text{-}Z^1\text{-}A^2\text{-}Z^2\text{-}A^3 \qquad \text{III 2}$$

$$R^1\text{-}A^1\text{-}Z^1\text{-}A^1\text{-}Z^1\text{-}A^2\text{-}Z^2\text{-}A^3 \qquad \text{III 3}$$

$$R^1\text{-}A^1\text{-}Z^1\text{-}A^1\text{-}Z^1\text{-}A^1\text{-}Z^1\text{-}A^2\text{-}Z^2\text{-}A^3 \qquad \text{III 4}$$

In den mesogenen Resten der Formel III bedeutet $R^1$ bevorzugt einen unsubstituierten oder durch mindestens ein Halogenatom substituierten Alkyl- oder Alkenylrest, worin eine oder zwei nicht benachbarte $CH_2$-Gruppen dieser Reste durch O-Atome und/oder durch -O-CO-, -CO-O- und/oder -O-CO-O- Gruppen ersetzt sein können.

Halogen bedeutet vorzugsweise F oder Cl.

Ferner sind die mesogenen Reste der Formel III bevorzugt, worin $R^1$ CN, F oder Cl bedeutet.

Falls $R^1$ ein Alkylrest oder Alkoxyrest bedeutet, so kann dieser geradkettig oder verzweigt sein. Vorzugsweise ist er geradkettig, hat 2, 3, 4, 5, 6, 7 oder 8 C-Atome und bedeutet demnach bevorzugt Ethyl, Propyl, Butyl, Pentyl, Hexyl, Heptyl, Octyl, Ethoxy, Propoxy, Butoxy, Pentoxy, Hexoxy, Heptoxy oder Octoxy, ferner Methyl, Nonyl, Decyl, Undecyl, Dodecyl, Tridecyl, Tetradecyl, Pentadecyl, Methoxy, Nonoxy, Decoxy, Undexocy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls $R^1$ einen Alkenylrest bedeutet, so kann dieser geradkettig oder verzweigt sein. Vorzugsweise ist er geradkettig und hat 2 bis 10 C-Atome. Er bedeutet demnach besonders Vinyl, Prop-1- oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8-oder Dec-9-enyl.

Mesogene Reste der Formel III mit verzweigter Flügelgruppe $R^1$ können gelegentlich z.B. wegen einer Verminderung der Neigung zu Kristallisation als Comonomere von Bedeutung sein. Verzweigte Gruppen dieser Art enthalten in der Regel nicht mehr als eine Kettenverzweigung. Bevorzugte verzweigte Reste $R^1$ sind Isopropyl, 2-Butyl (= 1-Methylpropyl), Isobutyl (= Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 2-Octyloxy, 2-Oxa-3-methylbutyl, 3-Oxa-4-methylpentyl, 4-Methylhexyl, 2-Nonyl, 2-Decyl, 2-Dodecyl, 6-Methyloctoxy, 6-Methyloctanoyloxy, 5- Methylheptyloxycarbonyl, 2-Methylbutyryloxy, 3-Methylvaleryloxy, 4-Methylhexanoyloxy, 2-Chlorpropionyloxy, 2-Chlor-3-methylvaleryloxy, 2-Methyl-3-oxapentyl, 2-Methyl-3-oxahexyl.

2-, 3- und 4-kernige mesogene Reste sind bevorzugt. Weiter bevorzugt sind solche Reste, die nicht mehr als eine 1,4-Bicyclo(2,2,2)-octylengruppe, Piperidin-1,4-diylgruppe oder 1,2,3,4-Tetrahydronaphthalin-2,-6-diyl-gruppe enthalten.

In 5-kernigen mesogenen Resten ist $Z^2$ bevorzugt eine Einfachbindung oder $-CH_2CH_2-$.

Von den mesogenen Resten der Formel III, die eine heterocyclische Gruppe enthalten, sind die mit einer Pyridin-2,5-diylgruppe, Pyridazin-2,5-diylgruppe, Pyrimidin-2,5-diylgruppe oder Piperidin-1,4-diylgruppe besonders bevorzugt.

Im folgenden wird eine kleinere Gruppe von besonders bevorzugten mesogenen Resten der Formeln III 1, III 2 und III 3 aufgeführt. Dabei bedeutet der Einfachheit halber Cyc eine 1,4-Cyclohexylengruppe, Dio eine Dioxan-2,5-diylgruppe, Cy eine 1,4-Cyclohexylengruppe, worin auch eine oder zwei nicht benachbarte $CH_2$-Gruppen durch -O- ersetzt sein können, Phe eine 1,4-Phenylengruppe, worin auch eine oder mehrere CH-Gruppen durch N ersetzt sein können. PheX eine 1,4-Phenylengruppe, die ein- oder zweifach durch F, Cl und/oder $CH_3$ substituiert ist, Bi eine 1,4-Bicyclo[2.2.2]octylgruppe, Pip eine Piperidin-1,4-diylgruppe und Nap eine Deca-, Tetrahydronaphthalin-2,6-diyl- oder Naphthalin-2,6-diylgruppe.

Besonders bevorzugte mesogene Reste der Teilformeln III 1 sind die der Teilformeln III 1-1 bis III 1-8:

$R^1$-Cyc-$Z^2$-Cyc- III 1-1

$R^1$-Phe-$Z^2$-Phe- III 1-2

$R^1$-Phe-$Z^2$-PheX- III 1-3

$R^1$-Phe-$Z^2$-Cyc- III 1-4

$R^1$-Cyc-$Z^2$-Phe- III 1-5

$R^1$-Phe-$Z^2$-PheX- III 1-6

$R^1$-Cyc-$Z^2$-PheX- III 1-7

$R^1$-PheX-$Z^2$-Phe- III 1-8

In den Verbindungen der Teilformeln III 1-1 bis III 1-8 bedeutet R ganz besonders bevorzugt eine Alkyl- oder Alkenylgruppe, ferner Alkoxy oder Alkanoxyloxy mit jeweils 1-13 C-Atomen. Weiter ist in diesen Verbindungen $Z^2$ ganz besonders bevorzugt eine Estergruppe C (-CO-O- oder -O-CO-), $-CH_2CH_2-$ oder eine Einfachbindung.

Besonders bevorzugte mesogene Reste der Teilformeln III 2 sind die der Teilformeln III 2-1 bis III 2-16:

$R^1$-Phe-$Z^1$-Phe-$Z^2$-Phe- III 2-1

$R^1$-PheX-$Z^1$-Phe-$Z^2$-Phe- III 2-2

$R^1$-Phe-$Z^1$-Phe-$Z^2$-PheX- III 2-3

$R^1$-Cyc-$Z^1$-Cyc-$Z^2$-Cyc- III 2-4

$R^1$-Cyc-$Z^1$-Phe-$Z^2$-Phe- III 2-5

$R^1$-Cyc-$Z^1$-Cyc-$Z^2$-Phe- III 2-6

$R^1$-Cyc-$Z^1$-Cyc-$Z^2$-Dio- III 2-7

$R^1$-Cyc-$Z^1$-Phe-$Z^2$-PheX- III 2-8

$R^1$-Cyc-$Z^1$-Cyc-$Z^2$-PheX- III 2-9

$R^1$-Bi-Cyc-$Z^2$-Cyc- III 2-10

$R^1$-Nap-$Z^1$-Cyc-$Z^2$-Phe- III 2-11

$R^1$-Cy-$Z^1$-Phe-$Z^2$-Phe- III 2-12

$R^1$-Dio-$Z^1$-Cyc-$Z^2$-Cyc- III 2-13

$R^1$-Phe-$Z^1$-Cyc-$Z^2$-Cyc- III 2-14

$R^1$-Cyc-$Z^1$-Phe-$Z^2$-Cyc- III 2-15

$R^1$-Cyc-$Z^1$-PheX-$Z^2$-Cyc III 2-16

Von den Verbindungen der Teilformel III 2-1 bis III 2-16, die eine 1,4-Phenylengruppe enthalten, worin eine oder zwei $CH_2$-Gruppen durch N ersetzt sind, sind diejenigen mit einer Pyridin-2,5-diylgruppe oder Pyrimidin-2,5-diylgruppe

ganz besonders bevorzugt.

Besonders bevorzugte mesogene Reste der Teilformeln III 3 sind die der Teilformeln III 3-1 bis III 3-19:

| | |
|---|---|
| $R^1$-Phe-$Z^1$-Phe-$^{Z1}$-Phe-$Z^2$-Phe- | III 3-1 |
| $R^1$-Cyc-$Z^1$-Cyc-$Z^1$-Cyc-$Z^2$-Cyc- | III 3-2 |
| $R^1$-Cyc-$Z^1$-Phe-$Z^1$-Phe-$Z^2$-Phe- | III 3-3 |
| $R^1$-Cyc-$Z^1$-Cyc-$Z^1$-Phe-$Z^2$-Phe- | III 3-4 |
| $R^1$-Cyc-$Z^1$-Cyc-$Z^1$-Cyc-$Z^2$-Phe- | III 3-5 |
| $R^1$-Cyc-$Z^1$-Phe-$Z^1$-Phe-Cyc- | III 3-6 |
| $R^1$-Cyc-$Z^1$-Cyc-$Z^1$-Phe-Cyc- | III 3-7 |
| $R^1$-Cyc-$Z^1$-Phe-$Z^1$-Cyc-$Z^2$-Cyc- | III 3-8 |
| $R^1$-Phe-$Z^1$-Cyc-$Z^1$-Cyc-$Z^2$-Cyc- | III 3-9 |
| $R^1$-Phe-$Z^1$-Phe-$Z^1$-Cyc-$Z^2$-Cyc | III 3-10 |
| $R^1$-Phe-$Z^1$-Phe-$Z^1$-Phe-$Z^2$-PheX- | III 3-11 |
| $R^1$-Cyc-$Z^1$-Cyc-$Z^1$-Phex-$Z^2$-Phe- | III 3-12 |
| $R^1$-Cyc-$Z^1$-Cyc-$Z^1$-Phe-$Z^2$-PheX- | III 3-13 |
| $R^1$-Cyc-$Z^1$-PheX-$Z^1$-Phe-$Z^2$-Cyc- | III 3-14 |
| $R^1$-Cyc-$Z^1$-Phe-$Z^1$-PheX-$Z^2$-Cyc- | III 3-15 |
| $R^1$-PheX-$Z^1$-Phe-$Z^1$-Cyc-$Z^2$-Cyc- | III 3-16 |
| $R^1$-Dio-$Z^1$-Cyc-$Z^1$-Cyc-$Z^2$-Cyc- | III 3-17 |
| $R^1$-Cyc-$Z^1$-Cyc-$Z^1$-Cy-$Z^2$-Phe- | III 3-18 |
| $R^1$-Cyc-$Z^1$-Pip-$Z^1$-Phe-$Z^2$-Phe- | III 3-19 |

In den Verbindungen der Teilformeln III 3-1 bis III 3-19 ist ganz besonders bevorzugt mindestens eine der beiden $Z^1$-Gruppen oder $Z^2$ eine Einfachbindung.

Die Herstellung von flüssigkristallinen Seitenkettenpolymeren und Elastomeren erfolgt nach an sich bekannten Polymerisationsverfahren, wie sie in der Literatur beschrieben sind (z.B. in den Standardwerken wie Ocian, Principles of Polymerization, McGraw-Hill, New York), und zwar unter Reaktionsbedingungen, die für die Umsetzungen bekannt und geeignet sind. Dabei kann man auch von an sich bekannten, hier nicht näher erwähnten Varianten Gebrauch machen.

Bei den flüssigkristallinen Seitenkettenpolymeren können einerseits bereits flüssigkristalline und/oder mesogene Gruppen tragende Monomere und/oder Oligomere polymerisiert werden, wobei hier weiter zwischen Kettenwachstumsreaktionen (z.B. radikalische oder ionische Polymerisation) und Schrittwachstumsreaktionen (z.B. Polykondensation oder Polyaddition) unterschieden werden kann. Andererseits können die mesogenen Gruppen nachträglich mit Hilfe einer sogenannten polymer-analogen Umsetzung an bereits bestehende Polymerketten angeheftet werden.

Flüssigkristalline Elastomere können durch eine 3-dimensionale Vernetzung sowohl von flüssigkristallinen Hauptkettenpolymeren als auch von flüssigkristallinen Seitenkettenpolymeren erhalten werden, wobei jedoch die Verwendung von Seitenkettenpolymeren bevorzugt ist.

In den erfindungsgemäßen Anordnungen werden i.a. vorzugsweise Seitenkettenpolymere verwendet.

Die Monomerphase der erfindungsgemäßen Anordnungen basiert auf einem Flüssigkristall, der vom kalamitischen, diskotischen oder lyotropen Typ sein kann.

Dabei wird als Flüssigkristall in aller Regel eine Mischung verschiedener Einzelverbindungen verwendet, die z.B. ausgewählt sein können aus den Klassen der Azoxybenzole, Benzylidenaniline, Biphenyle, Terphenyle, Phenyl- oder Cyclohexylbenzoate, Cyclohexancarbonsäurephenyl- oder cyclohexyl-ester, Phenyl- oder Cyclohexylester oder Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenylcyclohexyl)-ethane, 1-Cyclohexyl-2-biphenylylethane, 1-Phenyl-2-cyclohexylphenylethane, gegebenenfalls halogenierten Stilbene, Benzylphenylether, Tolane, substituierten Zimtsäuren oder auch aus weiteren Klassen nematischer oder nematogener Substanzen. Die 1,4-Phenylengruppen in den aufgeführten Verbindungen können auch lateral mono- oder difluoriert sein.

Als Bestandteile der Monomerphase kommen weiter Verbindungen in Frage, die sich durch die Formeln 1, 2, 3, 4 und 5 charakterisieren lassen:

R'-L-E-R" 1

R'-L-COO-E-R" 2

R'-L-OOC-E-R" 3

R'-L-$CH_2CH_2$-E-R" 4

R'-L-C≡C-E-R" 5

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2, 5-diyl, Pyridin-2,5-diyl oder 1,3-Dioxan-2,5-diyl bedeuten.

Vorzugsweise ist einer der Rest L und E Cyc, Phe oder Pyr. E ist vorzugsweise Cyc, Phe oder Phe-Cyc. Vorzugsweise enthalten die erfindungsgemäßen Flüssigkristalle eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R" bedeuten in den Verbindungen der Teilformeln 1a, 2a, 3a, 4a und 5a jeweils unabhängig voneinander Alkyl, Alkenyl, Alkoxy, Alkenyloxy oder Alkanoxyloxy mit bis zu 8 Kohlenstoffatomen. Bei den meisten dieser Verbindungen sind R' und R" voneinander verschieden, wobei einer dieser Reste meist Alkyl oder Alkenyl ist. In den Verbindungen der Teilformeln 1b, 2b, 3b, 4b und 5b bedeutet R" -CN, -$CF_3$, -F, -Cl, -$OCHF_3$, -$OCF_3$, oder -NCS; R hat dabei die bei den Verbindungen der Teilformeln 1a bis 5a angegebene Bedeutung und ist vorzugsweise Alkyl oder Alkenyl. Aber auch andere Varianten der vorgesehenen Substituenten in den Verbindungen der Formeln 1, 2, 3, 4 und 5 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäß verwendeten Flüssigkristallmischungen enthalten vorzugsweise neben Komponenten aus der Gruppe der Verbindungen 1a, 2a, 3a, 4a und 5a (Gruppe 1) auch Komponenten aus der Gruppe der Verbindungen 1a, 2b, 3b, 4b, und 5b (Gruppe 2), deren Anteile vorzugsweise wie folgt sind:

Gruppe 1: 0 bis 60 %, insbesondere 5 bis 50 %,
Gruppe 2: 0 bis 60 %, insbesondere 5 bis 40 %.

Beispiele für smektische Einselverbindungen und smektische Mischungen finden sich z.B. in DE 35 15 374, DE 35 18 734, DE 37 12 895 oder DE 28 07 862, während einige diskotische Verbindungen z.B. in DE 39 25 582 angeführt sind.

Sowohl die in der Monomerphase als auch die in der Oligomer- bzw. Polymerphase verwendeten flüssigkristallinen Verbindungen können dielektrisch positiv oder dielektrisch negativ sein. Dielektrisch negative Monomerverbindungen sind beschrieben z.B. in DE 33 05 243, DE 34 10 734, DE 38 07 864, DE 40 12 865, DE 40 27 981, DE 40 37 630.

Die erfindungsgemäßen verwendbaren flüssigkristallinen Monomerverbindungen sind entweder bekannt oder können nach an sich bekannten Methoden hergestellt werden, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man von an sich bekannten, hier nicht erwähnten Varianten Gebrauch machen.

Die hier angeführten Angaben über monomere und oligomere bzw. polymere Flüssigkristallverbindungen sind nur beispielhaft zu verstehen und sollen die Erfindung keinesfalls begrenzen, sondern lediglich erläutern.

Der Fachmann wird den niedermolekularen Flüssigkristall und die flüssigkristalline Oligomer- bzw. Polymerphase und die jeweiligen Massenanteile der beiden Phasen in der Regel so auswählen, daß das binäre Monomere/Oligomer- bzw. Polymersystem eine möglichst große Mischungslücke aufweist.

Zur Verdeutlichung ist in Fig. 3 das Phasendiagramm für ein binäres System wiedergegeben, dessen Monomerphase aus der folgenden flüssigkristallinen Verbindung

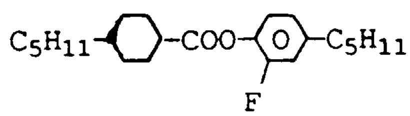

besteht, die folgende Parameter aufweist:

$\Delta\varepsilon = -0{,}9$

k 17 n 37 i, während die Polymerphase aus einem Copolymer der beiden folgenden Monomereinheiten

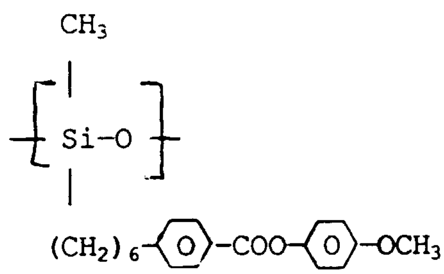

und

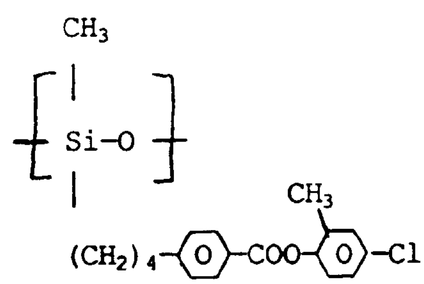

im Verhältnis 80 Gew.%: 20 Gew.% besteht. Der mittlere Polymerisationsgrad <m> beträgt etwa 120 und das Copolymer ist dielektrisch positiv.

Man erkennt, daß das System eine breite Mischungslücke über einen hohen Temperaturbereich aufweist; die kritische Temperatur $T_c$ liegt bei etwa 110 °C. Im Gebiet der Mischungslücke sind zwischen etwa 20 und 40 °C sowohl die Monomerphase als auch die Polymerphase nematisch; die Monomerphase ist oberhalb von etwa 40 °C isotrop und unterhalb von etwa 20 °C kristallin, während die Polymerphase über einen weiten Temperaturbereich nematisch ist. Der nematische Phasenbereich des monomeren Flüssigkristalls im Gebiet der Mischungslücke kann stark ausgedehnt werden, wenn dieser nicht von einer einzigen flüssigkristallinen Monomerverbindung, sondern von einer Mischung mehrerer Verbindungen gebildet wird. Das hier untersuchte System mit dem in Fig. 3 wiedergegebenen Phasendiagramm ist lediglich als einfaches Modellsystem zu verstehen, das die Wirkungsweise der Erfindung veranschaulichen soll und grundlegende Zusammenhänge verdeutlichen soll. Die Erfindung ist selbstverständlich nicht auf derartige einfache Systeme beschränkt, sondern der Fachmann kann jederzeit ohne erfinderisches Zutun komplexere Systeme, bei denen beide Phasen mehrkomponentig sind, auf der Basis der vorliegenden Beschreibung angeben.

Umfangreiche Untersuchungen haben gezeigt, daß das Zustandsgebiet der Mischungslücke i.a. um so größer wird, je kürzer die flexiblen Spacer des bzw. der flüssigkristallinen Oligomere und/oder Polymere gewählt werden. Andererseits wurde gefunden, daß daß die Orientierbarkeit der mesogenen Gruppen der flüssigkristallinen Oligomere bzw. Polymere mit zunehmender Spacerlänge verbessert wird, d.h. m.a.W. die Schwellenspannung der Polymerphase nimmt i.a. mit zunehmender Spacerlänge ab. Diese beiden gegenläufigen Effekte können am besten im Einklang gebracht werden, wenn die mittlere Spacerlänge <1> der flüssigkristallinen Oligomere und/oder Polymere zwischen 3 und 15 und insbesondere zwischen 4 und 10 beträgt.

Die mesogenen Gruppen der flüssigkristallinen Oligomere bzw. Polymere und die flüssigkristallinen Monomerverbindungen können so gewählt werden, daß eine weitgehende strukturelle Ähnlichkeit zwischen den beiden Phasen besteht, d.h. daß der größte Teil des niedermolekularen Flüssigkristalls ein mesogenes Gerüst aufweist, das mit den mesogenen Gruppen der Oligomer- bzw. Polymerphase weitgehend übereinstimmt bzw. mit diesen identisch ist; es ist aber auch möglich, daß sich der monomere Flüssigkristall und die mesogenen Gruppen der Oligomer- bzw. Polymerphase stärker unterscheiden.

Im Fall einer großen strukturellen Ähnlichkeit wird das Zustandsgebiet der Mischungslücke i.a. umso breiter, je länger die zweite Flügelgruppe der niedrigmolekularen Flüssigkristallverbindungen und je kürzer der flexible Spacer der flüssigkristallinen Oligomere bzw. Polymere im Mittel sind.

Das Zustandsgebiet der Mischungslücke kann i.a. auch verbreitert werden, wenn sich die mesogenen Gruppen der beiden Phasen stärker voneinander unterscheiden.

Es sind Anordnungen bevorzugt, bei denen die mesogenen Gruppen einer der beiden Phasen einen stärker polaren Charakter aufweisen, während die mesogenen Gruppen der anderen Phase unpolarer sind. Die stärker polaren mesogenen Gruppen können z.B. zumindest eine polare Endgruppe wie z.B. -F, -Cl, -CN, $-CF_3$, $-OCF_3$, $-OCHF_2$, -NCS, perhalogenierter Alkyl, Alkyl mit mehr als 4 C-Atomen, worin mindestens 2 nicht benachbarte $CH_2$-Gruppen durch -O-, -CO-, -COO- oder -OCO- ersetzt sind, oder auch andere polare Endgruppen aufweisen. Weiterhin weisen diese stärker polare mesogene Gruppen vorzugsweise mindestens einen Heterocyclus auf wie z.B. Pyrimidin-2,5-diyl, Pyridin-2,5-diyl, 1,3-Dioxan-2,5-diyl und/oder lateral fluorierte 1,4-Phenylengruppen wie z.B. 2-Fluor-1,4-Phenylen, 3-Fluor-1,4-Phenylen, 2,3-Difluor-1,4-phenylen oder 3,5-difluor-1,4-phenylen und/oder lateral durch Nitril-Gruppen substituierte trans-1,4-Cyclohexylengruppen wie z.B. cis-1-Cyano-trans-1,4-Cyclohexylen auf. Demgegenüber basiert die stärker unpolare mesogene Gruppe vorzugsweise auf wenig polaren verbindungen wie z.B. auf mit 2 Alkylgruppen terminal substituierten Bicyclohexanen, Diphenylen, Phenylcyclohexanen, Terphenylen, Phenylbicyclo-[2,2,2]-octanen, auf von den vorstehenden Verbindungsklassen abgeleitete Verbindungen mit unpolaren Brücken wie z.B. $-CH_2CH_2-$ oder $-C\equiv C-$ und auch weitere, hier nicht explizit genannte wenig polare Verbindungsklassen.

Eine Vergrößerung des Zustandsgebietes der Mischungslücke kann häufig auch erreicht werden, wenn die mesogenen Gruppen einer der beiden Phasen überwiegend 2-kernig sind, während die andere Phase einen höheren Anteil an 3- und/oder 4-kernigen mesogenen Gruppen aufweist.

Der mittlere Polymerisationsgrad der Oligomer- bzw. Polymerphase <m> ist typischerweise nicht kleiner als 10. Es werden aber auch vorzugsweise Oligomere mit 3-15 und insbesondere 4-9 Monomereinheiten verwendet.

In den folgenden Fig. 4 und 5 sind Polarisationsmikroskopieaufnahmen für ein erfindungsgemäßes System nach Fig. 3 gezeigt, wobei der Massenanteil der dort angegebenen Flüssigkristallverbindung 92 Gew.% und der der zweikomponentigen Polymermischung 8 Gew.% beträgt. Dieses erfindungsgemäße System ist in eine Flüssigkristallzelle mit d = 40 μm gefüllt, die mit Elektroden- und Ausrichtungsschichten versehen ist. Die niedrigmolekulare Matrix ist homogen orientiert. Die erfindungsgemäße Anordnung befindet sich zwischen gekreuzten Polarisatoren, wobei der vordere Polarisator parallel zur Vorzugsrichtung der niedermolekularen kontinuierlichen Phase ist.

Fig. 4 zeigt den feldfreien Zustand dieses Systems. Die Polymerphase liegt in sehr gleichmäßigen Tröpfchen einer relativ engen Größenverteilung vor und man erkennt, daß die Polymerphase homogen orientiert ist.

Aus Fig. 5 ersieht man, daß die Polymerphase bei Anlegen einer Spannung homöotrop orientiert wird, während die dielektrisch negative, kontinuierliche Monomerphase homogen orientiert bleibt (120 V. 500 Hz).

Wie bereits erwähnt, zeichnen sich die erfindungsgemäßen Anordnungen durch eine im Vergleich zur herkömmlichen PDLC- oder NCAP-Filmen verbesserte Stabilität aus, was insbesondere darauf zurückzuführen ist, daß die erfindungsgemäßen Anordnungen auf Flüssig-Flüssig-Dispersionen basieren. Falls die Monomerphase und die Polymerphase für die dielektrische Anisotropie Werte mit unterschiedlichen Vorzeichen aufweisen, kommt es offenbar zu einer zusätzlichen elektrostatischen Stabilisierung, wie dies aus den Fig. 4 und 5 hervorgeht. An der Phasengrenze Monomer/Polymer beobachtet man 2 Punktdefekte, was möglicherweise darauf zurückzuführen ist, daß sich Monomere und Polymere wegen der unterschiedlichen Vorzeichen von $\Delta\varepsilon$ an der Grenzfläche senkrecht zueinander anordnen. Das dadurch induzierte elektrische Feld bewirkt vermutlich eine zusätzliche Stabilisierung der dispergierten Polymertröpfchen.

Zur Stabilisierung der dispergischen Phase können den erfindungsgemäßen Anordnungen auch eine oder mehrere oberflächenaktive Substanzen zugesetzt werden, die bevorzugt ausgewählt werden aus der Gruppe der Verbindungen der Formel IV

$$[A^1\text{-}(C^1)_{0,1}\text{-}B^1]_{1,n} \qquad \text{IV}$$

worin

$A^1$ eine Gruppe, deren Löslichkeit in der Phase A deutlich höher ist als in der Phase B,

$B^1$ eine Gruppe, deren Löslichkeit in der Phase B deutlich höher ist als in der Phase A, und

$C^1$ eine lineare oder verzweigte oder mit $A^1$ und/oder $B^1$ zu einem Ring geschlossene C-Kette mit 1-40 C-Atomen, worin auch bis zur 15 nicht benachbarte $CH_2$-Gruppen durch -O-, -CO-, -COO-, -OCO-, -S-, -CH=CH-, -C≡C-, -C-(Halogen)$_2$-, -C($C_{1\text{-}5}$-Alkyl)Halogen-, -NH- oder -($C_{1\text{-}5}$-Alkyl)-N- ersetzt sein können,

bedeuten.

Der Index 1,n in Formel IV bedeutet, daß es sich bei den oberflächenaktiven Verbindungen sowohl um niedermolekulare, monomere Verbindungen als auch um oligomere oder polymere Substanzen handeln kann, wobei der mittlere Polymerisationsgrad n bis zu $10^3$ betragen kann; die Polymerisation kann z.B. über die Gruppen $C^1$

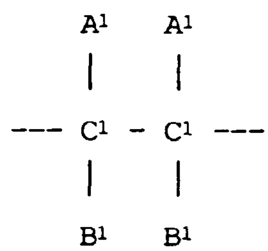

oder auch über $A^1$ und $B^1$ erfolgen:

$$\text{---}\ \text{-}A^1\text{-}(C^1)_{0,1}\text{-}B^1\text{-}A^1\text{-}(C^1)_{0,1}\text{-}B^1\text{-}\ \text{---}$$

Daneben sind auch noch andere Verknüpfungen möglich.

Durch den Index 0,1 bei der Gruppe $C^1$ ist angegeben, daß diese Gruppe auch fehlen kann.

Der Quotient aus den in Volumenprozenten angegebenen Löslichkeiten der Verbindungen $A^1$-$H_r$, wobei r je nach der Bindigkeit des endständigen Atoms zwischen 1 und 3 beträgt, in der Phase B beträgt vorzugsweise weniger als $10^{-2}$ und insbesondere weniger als $10^{-3}$; entsprechendes gilt für den Quotienten aus den Löslichkeiten von $B^1$-$H_r$ und $A^1$-$H_r$ in der Phase A.

Der auf die Summe der Massen von Phase A und Phase B bezogene Massenanteil der oberflächenaktiven Substanz ist vorzugsweise kleiner als 5 %, insbesondere kleiner als 2 % und ganz besonders kleiner als 1 %. Besonders bevorzugt beträgt der Massenanteil der oberflächenaktiven Substanz zwischen 0,01 % und 1 %.

Zur Stabilisierung der Flüssig-Flüssig-Dispersion können vorzugsweise auch Polymere verwendet werden, bei denen die bzw. eine oder einige der mesogenen Gruppen der Oligomer- bzw. Polymerphase und der Monomerphase in Form eines Blockcopolymeren an einer Hauptkette fixiert sind. Diese Blockcopolymere enthalten somit Blöcke mit unterschiedlicher Mischbarkeit und - je nach der Natur der mesogenen Gruppen - mit unterschiedlichen oder gleichen Dielektrizitätskonstanten. Im Bereich der Blockcopolymere tritt Mikrophasenseparation auf und die Blockcopolymere dienen als Phasenstabilisatoren bzw. Phasenvermittler bezüglich der Direktorientierung an der Grenzfläche Monomer/Polymer.

Ein Beispiel für ein durch ein Blockcopolymer stabilisiertes System wird im folgenden beschrieben. Die Monomerphase ist dielektrisch negativ und basiert auf

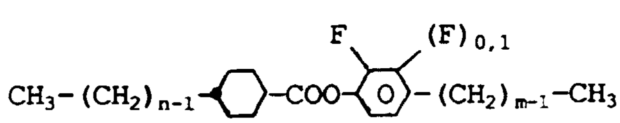

n,m = 5-8

Das Polymer ist dielektrisch positiv und basiert auf dem folgenden Copolymeren:

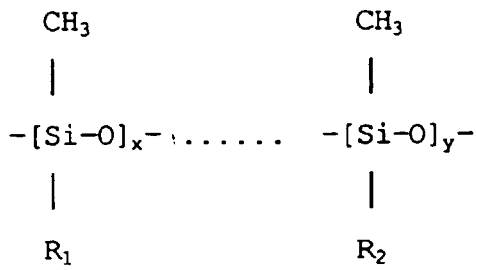

worin

$R^1$ 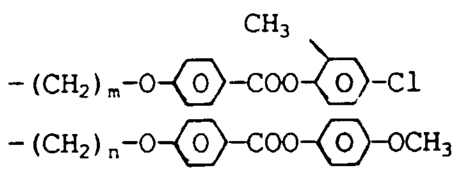

$R^2$

n,m 4-6
x+y 100 und
x:y 1:4

bedeuten.

Das Blockcopolymer hat folgende Struktur:

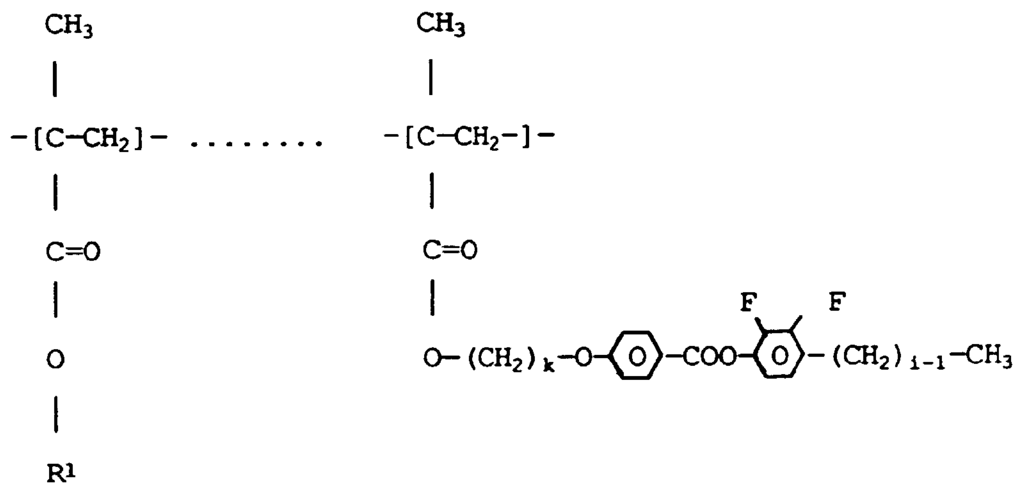

worin i = 6-8 und k = 4-6 sind und $R^1$ die oben angegebene Bedeutung hat.

Die diese Komponenten enthaltende Flüssig-Flüssig-Dispersion zeichnet sich durch günstige Eigenschaften und insbesondere durch eine hohe Stabilität aus. Das beschriebene, durch ein Blockcopolymer stabilisierte System ist nur beispielhaft zu verstehen und soll die Erfindung erläutern, ohne sie zu begrenzen.

Die in der kontinuierlichen Phase dispergierten Tröpfchen weisen vorzugsweise Durchmesser zwischen 0,1 µm und 50 µm und insbesondere von weniger als 25 µm und ganz besonders weniger als 5 µm auf.

Die oberflächenaktive Subtanz reichert sich an der Grenzfläche zwischen kontinuierlicher und dispergierter Phase an und bildet um das dispergierte Tröpfchen einen geschlossenen und/oder aus diskreten Einzelmolekülen gebildeten Schutzmantel, der das dispergierte Tröpfchen mechanisch schützt und stabilisiert. Die Dicke dieses Schutzmantels sollte im Vergleich zum Durchmesser des dispergierten Tröpfchens klein sein; der mittlere Tröpfchendurchmesser ist dabei vorzugsweise mindestens eine Größenordnung größer als die mittlere Dicke dieses Schutzmantels.

Zur Herstellung der erfindungsgemäßen Anordnungen werden die die Monomerphase bildenden Flüssigkristalle und die Oligomere und/oder Polymerphase zusammengegeben. Es ist auch möglich, Monomere, Oligomere und/oder Präpolymere der Polymerphase einzusetzen, wobei dann die Polymerisation in der erfindungsgemäßen Flüssig-Flüssig-Dispersion durchgeführt wird; in letzterem Fall muß üblicherweise ein Polymerisationsinitiator zugegeben werden. Zur Stabilisierung der dispergierten Phase kann eine oberflächenaktive Komponente zugefügt werden.

Zur Erzeugung der Dispersion werden vorzugsweise Kolloidmühlen, Homogenisatoren, Emulgierzentrifugen oder ähnliche Vorrichtungen benutzt. Besonders bevorzugt ist ein Verfahren, bei dem die verschiedenen Komponenten bei hohen Temperature (T>Tc) ineinander gelöst werden und durch anschließende Abkühlung binodal bzw. spinodal entmischt werden. Bei diesem Verfahren kann durch Variation der Abkühlrate die mittlere Tröpfchengröße und die Tröpfchengrößenverteilung gezielt beeinflußt werden. Die dispergierte Phase liegt danach in der kontinuierlichen Phase in Form kleiner Tröpfchen vor, deren Durchmesser typischerweise zwischen 0,1 und 10 µm und insbesondere zwischen 0,1 und 8 µm liegen.

Der erfindungsgemäßen Dispersion können gegebenenfalls weitere Zusätze wie z.B. pleochroitische Farbstoffe, chirale Dotierstoffe und auch andere Zusätze enthalten.

Die erfindungsgemäßen elektrooptischen Systeme zeichnen sich durch günstige elektrooptische Eigenschaften und durch eine hohe Langzeitstabilität aus. Daneben wird durch die Erfindung eine neuartige elektrooptische Anordnung bereitgestellt, die die Palette verfügbarer Displays erheblich bereichert.

## Patentansprüche

1. Zwischen einem transparenten und einem opaken Zustand schaltbare elektrooptische Anordnung, welche zwischen zwei mit Elektrodenschichten und gegebenenfalls mit Ausrichtungsschichten versehenen Substraten ein Dispersion aus zwei Phasen A und B enthält, dadurch gekennzeichnet, daß die Dispersion eine stabile Flüssig-Flüssig-Dispersion ist und daß eine der beiden Phasen A und B auf einem niedermolekularen Flüssigkristall und die andere auf einem flüssigkristallinen Polymer basiert.

2. Anordnung nach Anspruch 1, worin das flüssigkristalline Polymer auf einem oder mehreren Seitenkettenpolymeren basiert, welche eine oder mehrere Monomereinheiten der Formel I enthalten

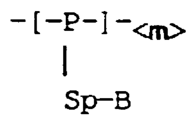

I

worin

P eine Polymerhauptketteneinheit,

Sp eine bivalente Spacergruppe,

B einen organischen "rod-like"-Rest mit mindestens zwei sechsgliedrigen Gruppen, einen "disk-like"- oder einen "board-like"-Rest und

<m> den mittleren Polymerisationsgrad

bedeuten.

3. Anordnung nach einem der Ansprüche 1 oder 2, worin die beiden Phasen A und B für die dielektrische Anisotropie Werte mit unterschiedlichem Vorzeichen aufweisen.

4. Anordnung nach einem der Ansprüche 1-4, dadurch gekennzeichnet, daß zur Stabilisierung der dispergierten Phase eine oder mehrere oberflächenaktive Substanzen der Formel IV zugesetzt sind

$$[A^1\text{-}(C^1)_{0,1}\text{-}B^1]1,<n> \qquad \text{IV}$$

worin

$A^1$ eine Gruppe ist, deren Löslichkeit in Phase A deutlich höher ist als in Phase B,

$B^1$ eine Gruppe ist, deren Löslichkeit in Phase B deutlich höher ist als in Phase A,

$C^1$ eine lineare oder verzweige C-Kette mit 1-40 C-Atomen ist, worin auch bis zu 15 nicht benachbarte $CH_2$-

Gruppen durch -O-, -CO-, -COO-, -OCO-, -S-, -HC=CH-, -C=C-, -CHHalogen, $-C(Halogen)_2$, -NH-, $-(C_{1-5}$-Alkyl)-N-, einen alicyclischen oder aromatischen Ring ersetzt sein können, und

<n> der mittlere Polymerisationsgrad ist, welcher bis zu $10^3$ betragen kann.

**5.** Verfahren zur Herstellung einer Anordnung nach einem der Ansprüche 1-4, dadurch gekennzeichnet, daß die Komponenten A und B gegebenenfalls unter Zusatz einer oberflächenaktiven Komponente so vermischt werden, daß die dispergierte Phase in der kontinuierlichen Phase in Tröpfchen mit Durchmessern zwischen 0,1 und 10 µm vorliegt.

**Claims**

**1.** Electro-optical arrangement which can be switched between a transparent state and an opaque state and contains, between two substrates provided with electrode layers and optionally with alignment layers, a dispersion comprising two phases A and B, characterised in that the dispersion is a stable liquid-liquid dispersion and in that one of the two phases A and B is based on a low-molecular-weight liquid crystal and the other is based on a liquid-crystalline polymer.

**2.** Arrangement according to Claim 1, in which the liquid-crystalline polymer is based on one or more sidechain polymers which contain one or more monomer units of the formula I

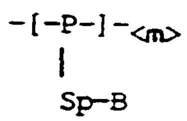

I

in which

P is a polymer main-chain unit,

Sp is a bivalent spacer group,

B is an organic rod-like radical containing at least two six-membered groups, a disc-like radical or a board-like radical, and

<m> is the mean degree of polymerisation.

**3.** Arrangement according to one of Claims 1 or 2, in which the two phases A and B have dielectric anisotropy values having different signs.

**4.** Arrangement according to one of Claims 1-3, characterised in that, in order to stabilise the disperse phase, one or more surface-active substances of the formula IV are added

$$[A^1-(C^1)_{0,1}-B^1]_{1,<n>} \qquad IV$$

in which

$A^1$ is a group whose solubility in phase A is significantly greater than in phase B,

$B^1$ is a group whose solubility in phase B is significantly greater than in phase A,

$C^1$ is a linear or branched carbon chain having 1-40 carbon atoms in which, in addition, up to 15 non-adjacent $CH_2$ groups may be replaced by -O-, -CO-, -COO-, -OCO-, -S-, -HC=CH-, -C≡C-, -CHhalogen-, $-C(halogen)_2$-, -NH-, $-(C_{1-5}$-alkyl)-N-, or an alicyclic or aromatic ring, and

<n> is the mean degree of polymerisation, which may be up to $10^3$.

**5.** Process for the production of an arrangement according to one of Claims 1-4, characterised in that components

A and B are mixed, optionally with addition of a surface-active component, in such a manner that the disperse phase is present in the continuous phase in droplets having diameters of between 0.1 and 10 µm.

**Revendications**

1. Dispositif électro-optique, pouvant être commuté entre un état transparent et un état opaque, qui contient, entre deux substrats pourvus de couches électrodes et éventuellement de couches d'orientation, une dispersion constituée de deux phases A et B, caractérisé en ce que la dispersion est une dispersion liquide-liquide stable et que l'une des deux phases A et B se fonde sur un cristal liquide à faible masse moléculaire, et l'autre sur un polymère mésomorphe.

2. Dispositif selon la revendication 1, dans lequel le polymère mésomorphe se fonde sur un ou plusieurs polymères en chaîne latérale, qui contiennent un ou plusieurs motifs monomères de formule (I)

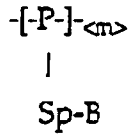 (I)

dans laquelle

P est un motif de chaîne principale de polymère,
Sp est un groupe écarteur bivalent,
B est un radical organique en bâtonnet, ayant au moins deux groupes à six chaînons, un radical en disque ou un radical en plaque, et
<m> est le degré moyen de polymérisation.

3. Dispositif selon l'une des revendications 1 ou 2, dans lequel les deux phases A et B présentent, pour l'anisotropie diélectrique, des valeurs de signes différents.

4. Dispositif selon l'une des revendications 1 à 4, caractérisé en ce que, pour stabiliser la phase dispersée, on ajoute une ou plusieurs substances tensioactives de formule (IV)

$$[A^{1}\text{-}(C^{1})_{0,1}\text{-}B^{1}]1,<n> \qquad IV$$

dans laquelle

$A^1$ est un groupe dont la solubilité dans la phase A est nettement supérieure à sa solubilité dans la phase B,
$B^1$ est un groupe dont la solubilité dans la phase B est nettement supérieure à sa solubilité dans la phase A,
$C^1$ est une chaîne carbonée linéaire ou ramifiée ayant de 1 à 40 atomes de carbone, dans laquelle aussi jusqu'à 15 groupes $CH_2$ non voisins peuvent être remplacés par -O-, CO-, -COO-, -OCO-, -S-, -HC=CH-,-C≡C-, un radical CH-halogéno, -C(halogéno)$_2$, -NH-, -(alkyle en $C_{1-5}$)-N, un noyau alicyclique ou aromatique, et
<n> est le degré moyen de polymérisation, qui peut aller jusqu'à 103.

5. Procédé pour fabriquer un dispositif selon l'une des revendications 1 à 4, caractérisé en ce que les constituants A et B sont, éventuellement avec addition d'un constituant tensioactif, mélangés de façon que la phase dispersée se présente dans la phase continue sous forme de gouttelettes ayant un diamètre compris entre 0,1 et 10 µm.

Fig. 1a

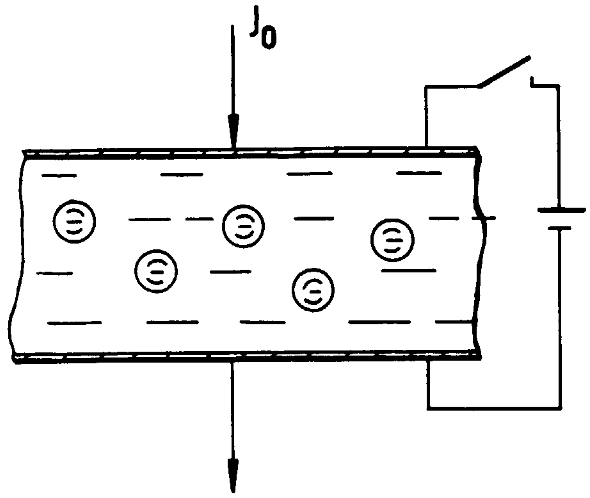


Fig. 1b

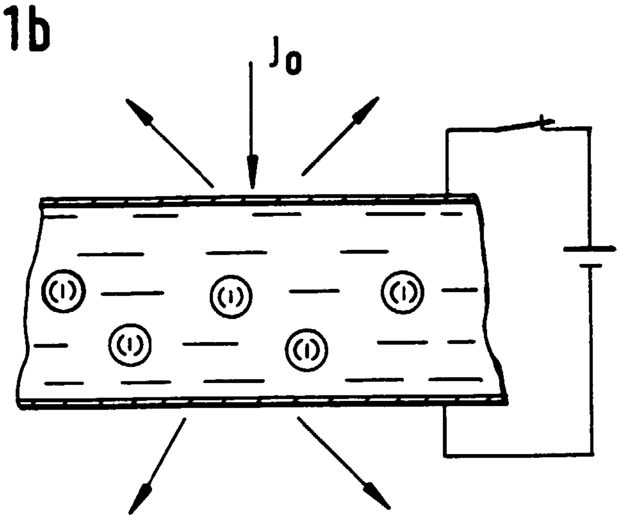

Fig. 2a

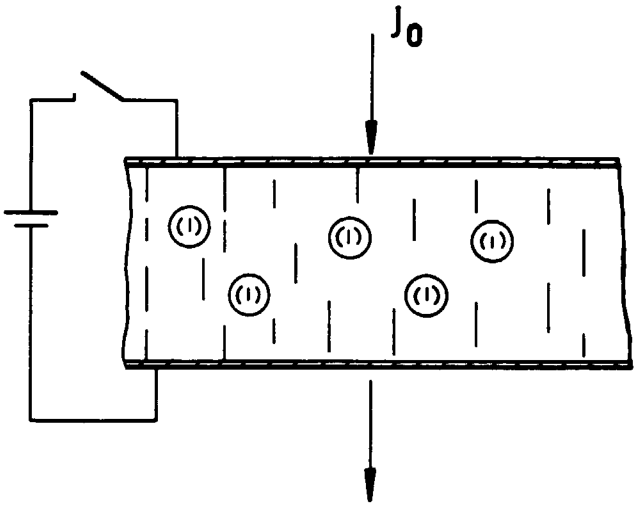


Fig.2b

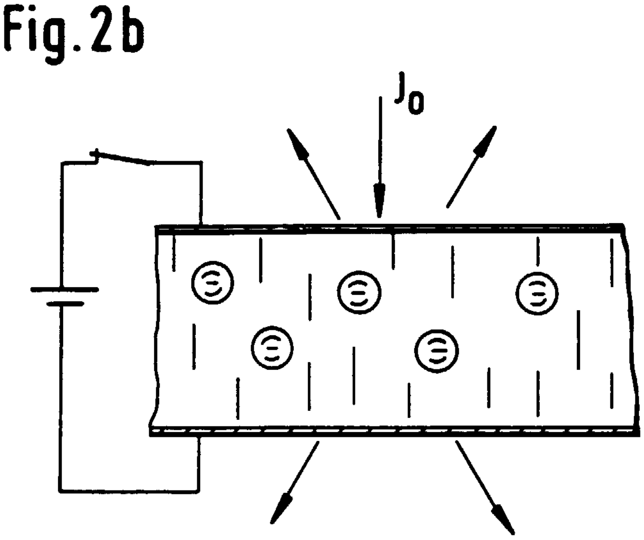

Fig. 3

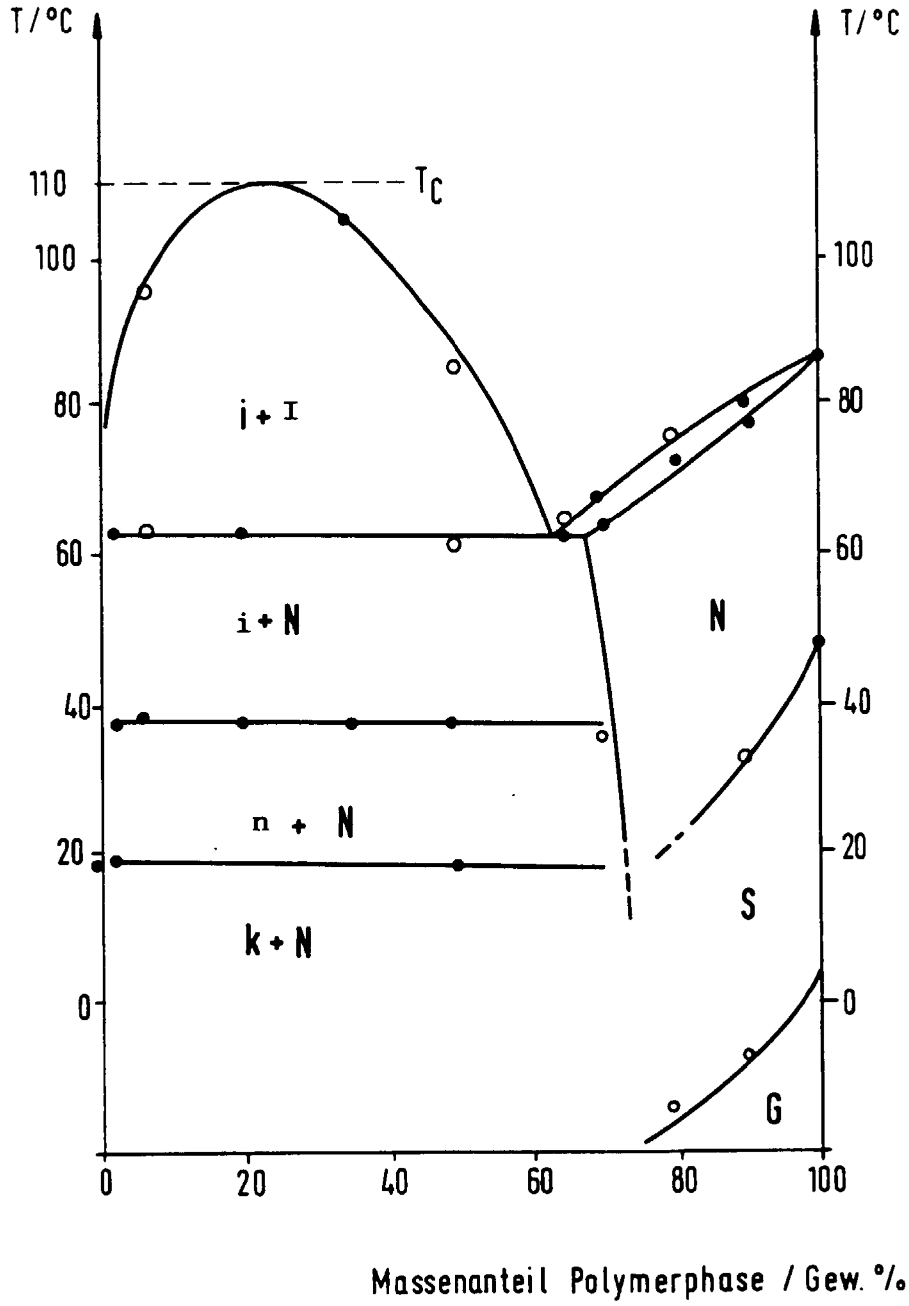
T / °C
T / °C
110
100
80
60
40
20
0
T_C
i + I
i + N
n + N
k + N
N
S
G
100
80
60
40
20
0
0
20
40
60
80
100
Massenanteil Polymerphase / Gew. %

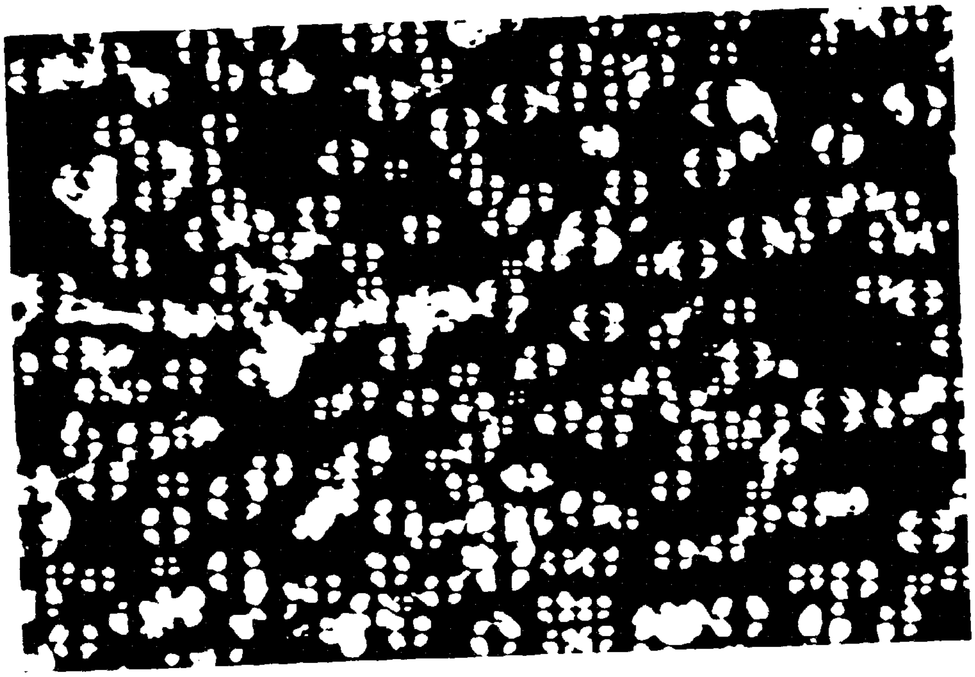

Fig. 4.

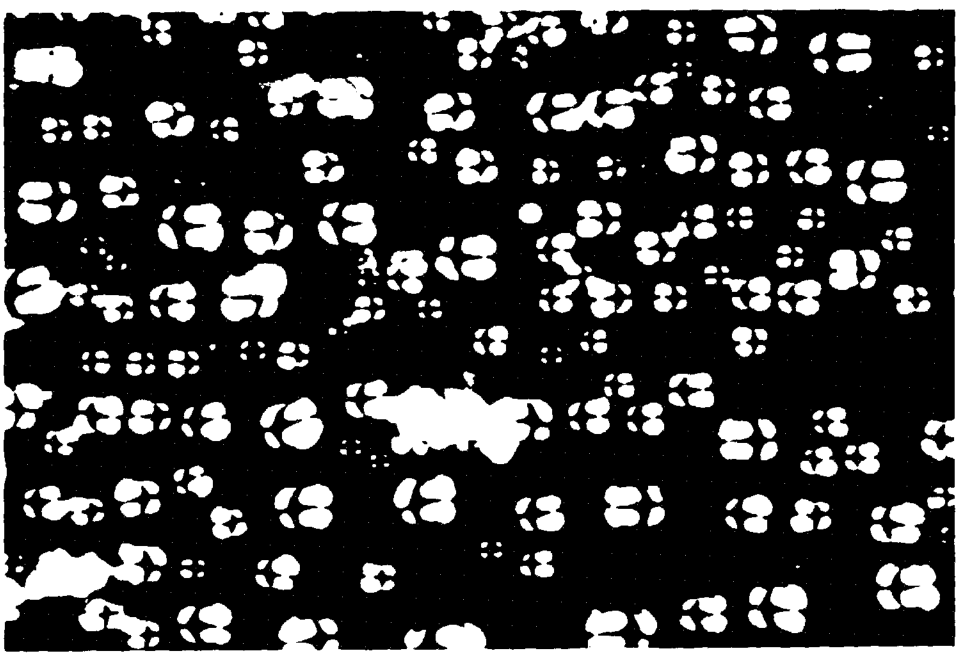

Fig. 5.